(19) Europäisches Patentamt
European Patent Office
Office européen des brevets

(11) **EP 2 522 554 A1**

(12) **EUROPEAN PATENT APPLICATION**

(43) Date of publication:
**14.11.2012 Bulletin 2012/46**

(51) Int Cl.:
**B60S 1/08** (2006.01)    **G01D 5/24** (2006.01)
**G01N 27/22** (2006.01)

(21) Application number: **12165639.1**

(22) Date of filing: **26.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.05.2011 US 201113106172**

(71) Applicant: **Delphi Technologies, Inc.**
**Troy, MI 48007 (US)**

(72) Inventors:
• **Murphy, Morgan D.**
**Kokomo, IN Indiana 46901 (US)**

• **Fortune, Duane D.**
**Lebanon, IN Indiana 46052 (US)**
• **Kincaid, Kevin D.**
**Kokomo, IN Indiana 46902 (US)**

(74) Representative: **Denton, Michael John et al**
**Delphi France SAS**
**Bât. le Raspail - ZAC Paris Nord 2**
**22, avenue des Nations**
**CS 65059 Villepinte**
**95972 Roissy CDG Cedex (FR)**

(54) **Windshield moisture detector**

(57)    A system (10), controller (20), and method (400) for detecting moisture on a windshield (12) that uses an isolated electrode (16) coupled to a windshield (12). The isolated electrode (16) is configured to exhibit an electrical impedance indicative of moisture present on a surface of the windshield (12). The controller (20) is configured to determine an electrode impedance value corresponding to the electrical impedance exhibited by the isolated electrode (16) for detecting moisture on the windshield (12). By using an isolated electrode (16), the system (10) is simpler and less expensive than other systems that have at least one electrode providing a return path for another electrode. Also, a way to use the isolated electrode (16) for both detecting moisture on the windshield (12), and heating the windshield (12) is described.

FIG. 2

## Description

TECHNICAL FIELD

The invention generally relates to detecting moisture on a windshield, and more particularly relates using an isolated electrode coupled to the windshield to detect moisture on the windshield.

BACKGROUND OF INVENTION

Rain sensors have been developed to detect the presence of moisture (e.g., rain or other condensation) on a vehicle windshield, and to turn on and off wipers, as necessary, when such moisture is detected. Automatically detecting rain, sleet, fog, and the like, and taking appropriate action for example, turning on/off wiper blades at a proper speed potentially reduces distractions to the driver, allowing the driver to better concentrate on the road ahead. However, inappropriate operation of the wipers such as failing to actuate wipers when moisture is present may also create hazardous conditions. Moreover, such systems are also susceptible to "dirt" distractions which may cause a false moisture detection when the problem is actually dirt is on the windshield.

Some rain sensors are optical based devices. Optical based devices are considered to be relatively expensive and have relatively large package sizes that may undesirable obstruct a vehicle operator's field of view when mounted adjacent a vehicle windshield. Other problems associated with such optical sensors are well summarized in United States Patent Application Number 2007/0162201 by Veerasamy, published on July 12, 2007, the entire contents of which is hereby incorporated by reference herein.

SUMMARY OF THE INVENTION

In accordance with one embodiment of this invention, a system for detecting moisture on a windshield is provided. The system includes an isolated electrode and a controller. The isolated electrode is coupled to a windshield. The isolated electrode is configured to exhibit an electrical impedance indicative of moisture present on a surface the windshield. The controller is in electrical communication with the isolated electrode. The controller is configured to determine an electrode impedance value corresponding to the electrical impedance exhibited by the isolated electrode for detecting moisture on the windshield.

In another embodiment of the present invention, a controller for use in a windshield moisture detection system that includes a single isolated electrode configured to exhibit an electrical impedance indicative of moisture present on a windshield is provided. The controller includes an impedance determination circuit and an activation signal output. The impedance determination circuit is configured to determine the electrical impedance of the isolated electrode. The activation signal output is configured to output an activation signal when the electrical impedance indicates a moisture presence.

In yet another embodiment of the present invention, a method for detecting moisture on a windshield is provided. The method includes the step of providing an isolated electrode coupled to a windshield. The isolated electrode is configured to exhibit an electrical impedance indicative of moisture present on a surface of the windshield. The method also includes the step of determining an electrode impedance value corresponding to the electrical impedance exhibited by the isolated electrode for detecting moisture on the windshield.

Further features and advantages of the invention will appear more clearly on a reading of the following detailed description of the preferred embodiment of the invention, which is given by way of non-limiting example only and with reference to the accompanying drawings.

BRIEF DESCRIPTION OF DRAWINGS

The present invention will now be described, by way of example with reference to the accompanying drawings, in which:

Fig. 1 is a perspective view a vehicle equipped with a system for detecting moisture on a windshield in accordance with one embodiment;

Fig. 2 is a schematic diagram of the system of Fig. 1 in accordance with one embodiment;

Fig. 3 is schematic diagram of an alternative system of Fig. 1 in accordance with one embodiment; and

Fig. 4 is a flowchart of a method used to detect moisture on a windshield in accordance with one embodiment.

DESCRIPTION OF THE PREFERRED EMBODIMENT

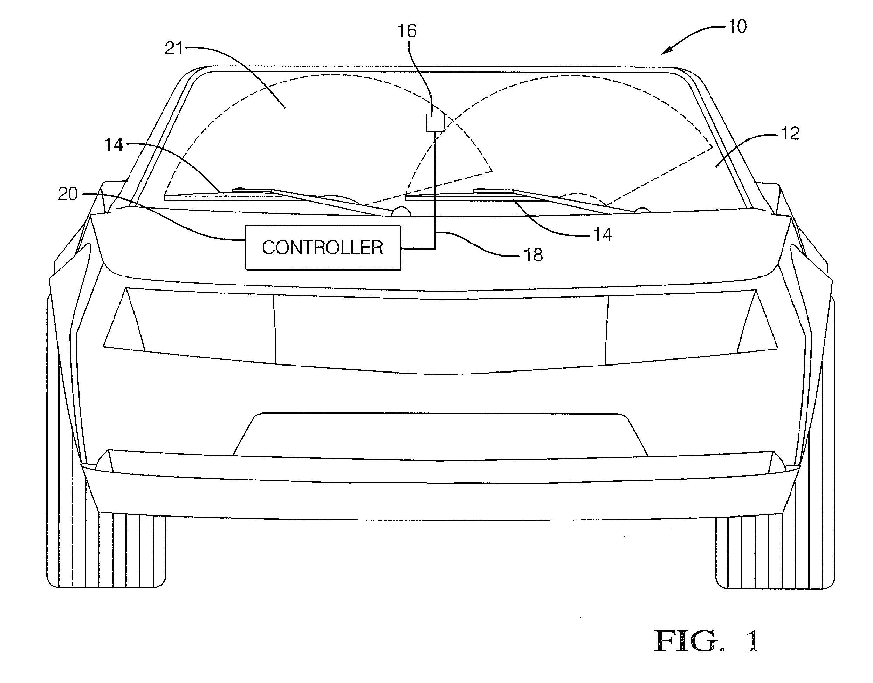

Fig. 1 illustrates a non-limiting example of a system 10 for detecting moisture on a windshield 12. As used herein, windshield means anything that may block wind, rain, dirt, bugs, or other objects from passing through the windshield. For example, a windshield may be a window formed of clear glass or clear polymer, or the windshield may be formed of an opaque material, for example vinyl siding for buildings. As will become apparent in the discussion below, it may be desirable to detect moisture on a variety of surfaces for a variety of reasons. For example, the system 10 may be used to detect a rain shower outside a building and then, in response, sound an alarm so building occupants can determine if it is necessary to close any open windows. In the example shown in Fig. 1, the windshield 12 is illustrated as a forward windshield on a vehicle such as an automobile equipped with windshield wipers 14. In this example the windshield wipers 14 may be activated if moisture (e.g. condensation or rain) is detected on the windshield 12. Moisture on the windshield 12 may be in the form of fogging on the inside of the windshield, and in response the vehicles heating and ventilation system may be activated, or a heating element adjacent the windshield 12 may be activated.

The system 10 may include an isolated electrode 16 coupled to the windshield 12. The isolated electrode 16 is generally configured to exhibit an electrical impedance or field impedance that may be indicative of moisture present on a surface the windshield 12. As used herein, the word isolated used with regard to an electrode means that the isolated electrode 16 is used separate and independent from any return electrode. There are numerous examples of rain detection systems that use pairs of electrodes to project an electric field through a windshield, such as United States Patent Application Number 2007/0162201 by Veerasamy, published on July 12, 2007, and WIPO Publication number WO2001/891 by Netzer, published November 1, 2001. In contrast, the system 10 described herein detects moisture on a windshield using only a single electrode, and so is distinguished from the publications cited above that use pairs of electrodes. As such, an isolated electrode is not comparable to any electrode pair or non-isolated plurality of electrodes where any one or more of the electrodes is used to provide a return path for an electric field emitted by an isolated electrode 16. Using an isolated electrode 16 is advantageous because only a single wire 18 is necessary to connect the isolated electrode 16 to a controller 20, and so cost is reduced. Testing has demonstrated that the system 10 is able to distinguish instances when the windshield 12 is dry from instances when water is present on the windshield 12.

The isolated electrode 16 may be formed of a material that is electrically conductive. The non-limiting example in Fig. 1 illustrates the isolated electrode 16 as occupying a small region of the windshield only for the purpose of explanation. The isolated electrode may be located proximate to a rear view mirror assembly (not shown) so that the view through the windshield 12 is not unnecessarily obstructed. By way of example and not limitation, the isolated electrode may be a 100mm by 100mm sheet of copper foil adhesively attached to the windshield 12. Alternatively, the isolated electrode 16 may be a wire distributed over a portion of the windshield (not shown), or may be a transparent metal film such as indium tin oxide (ITO) that may be arranged to cover all or most of the windshield 12 (not shown). Also, the isolated electrode 16 may be attached to an inner or outer surface of the windshield, or it may be located between laminated layers of known materials used to form transparent surfaces such as building windows or vehicle windshields. For reasons of durability, it may be preferable that the isolated electrode 16 is not located on the outside (i.e. exterior side) of the windshield 12 as it would be unnecessarily exposed to the elements. Also, in vehicle applications, it may be preferable to locate the isolated electrode 16 proximate to a wiped area 21 of the windshield 12 that is wiped by the windshield wipers 14, as illustrated in Fig. 1.

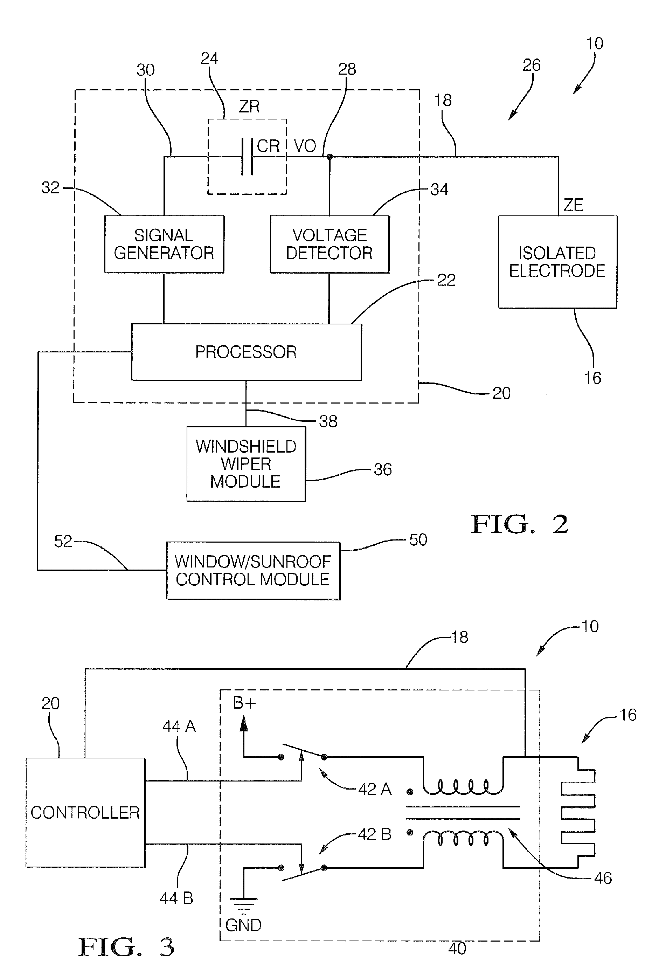

Fig. 2 illustrates a non-limiting example of the controller 20 in electrical communication with the isolated electrode 16 via wire 18. The controller 20 may be equipped with an impedance determination circuit configured to determine the electrical impedance of the isolated electrode 16, and so may be configured to determine an electrode impedance value ZE corresponding to the electrical impedance exhibited by the isolated electrode 16. The electrical impedance of the isolated electrode 16 is also sometimes called field impedance. The electrode impedance value ZE may then be used as an indicator that moisture is present on the windshield 12. The controller 20 may include a processor 22 such as a microprocessor or other control circuitry as should be evident to those in the art. The controller 20 may also include memory (not shown) such as non-volatile memory, for example electrically erasable programmable read-only memory (EEPROM) for storing one or more routines, thresholds and captured data. The one or more routines may be executed by the processor 22 to perform steps for determining if signals received by the controller 20 indicate an electrode impedance value ZE indicative of a moisture presence on the windshield 12, as described herein.

The controller 20 may include a reference impedance device 24 that may be characterized as having a reference impedance value ZR. For example, the reference impedance device 24 may be a capacitor, resistor, inductor, or combination of these and other components that exhibit a reference impedance value ZR. The reference impedance device 24 may be electrically coupled to the isolated electrode 16 by a wire 18 to form a network 26. For the purpose of explanation and not limitation, the reference impedance device 24 may be characterized as defining a reference output 28 in electrical contact with the isolated electrode 16, and defining a reference input 30 in electrical contact with a signal generator 32. The signal generator 32 is generally configured to output an excitation signal VI on the reference input 30, for example a sinusoidal signal characterized as having a frequency and magnitude. In response to the excitation signal VI, an isolated electrode signal VO may arise that may be detected or measured by a voltage detector 34. The combination of the signal generator 32, the reference impedance device 24, and the voltage detector 34 form a non-limiting example of an impedance determination circuit that may be used for determining electrode impedance value ZE.

The reference impedance device 24 is typically formed of only linear passive components, e.g. capacitors, resistors, and inductors, and the excitation signal in one embodiment is a sinusoidal type signal. Then, in response to an excitation signal VI being applied, an isolated electrode signal VO may occur on the isolated electrode 16 that may be useful for determining the electrical impedance ZE exhibited by the isolated electrode 16. For this example of the reference impedance device 24 being formed of linear components, and a sinusoidal excitation signal VI, the electrical impedance ZE of the isolated electrode may be calculated using a formula such as

$$ZE = VO * ZR / (VI - VO) \qquad\qquad \text{Equation 1}$$

where the variables may be complex numbers, or in some cases may be simplified to be based on voltage magnitudes and simple component characteristic values such as capacitance.

If the excitation signal VI is sinusoidal, then the excitation signal VI may be characterized as having an excitation magnitude VIM and an excitation frequency VIF. Similarly, the isolated electrode signal VO may be characterized as having an isolated electrode magnitude VOM generated in response to the excitation signal VI, and an isolated electrode frequency VOF equal to the an excitation frequency VIF. If the reference impedance value ZR is known, and the excitation signal VI is known, the controller 20 may be configured to determine the electrode impedance value ZE based on a measurement of the isolated electrode signal VO by the voltage detector 34. The controller 20 may also be configured to determine if the electrode impedance value ZE is indicative of a moisture presence on a surface of the windshield 12, for example by comparing the electrode impedance value ZE to a threshold or using a look-up table stored in the processor 22.

Some configurations of the isolated electrode 16 may exhibit an electrode impedance value ZE that is predominately capacitive. For such an isolated electrode, the overall configuration of the controller may be simplified by using only a reference capacitor CR as the reference impedance device 24, as suggested in Fig. 2. The preferred value for the reference capacitor will be dependent on the expected range of the electrode impedance value ZE, for example a value between a minimum and maximum capacitance value exhibited by the isolated electrode 16. If the reference impedance device 24 includes only the reference capacitor CR, and the electrode impedance value ZE is predominately capacitive, in part because of the excitation frequency VIF selected, then it may be that only the excitation magnitude VIM needs to be known, and the isolated electrode magnitude VOM determined, in order to determine an electrode impedance value ZE. The simplification of the controller 20 is then by way of eliminating the necessity to measure phase of the various signals, and process complex math. In one embodiment, the capacitance value portion of the electrode impedance value ZE may be indicative of a moisture presence on a surface of the windshield when the capacitance value is greater than a threshold capacitance.

In another embodiment the reference impedance device 24 may be formed by a combination of an inductor and a capacitor (not shown) having values selected so that the reference impedance device 24 cooperates with the isolated electrode 16 to form a network 26 that is a resonant circuit having a resonant frequency. With such an arrangement, the said controller 20 may be configured to vary or sweep the excitation frequency VIF in order to determine a resonant frequency of the resonant circuit. Then since the values of the inductor and capacitor are fixed, the electrode impedance value ZE may be determined by calculation or by a look-up table.

The system 10 may include a vehicle windshield wiper module 36 configured to receive an activation signal 38 from the controller 20 for activating vehicle windshield wipers 14 to wipe the vehicle forward windshield 12. For example, the activation signal 38 may come from an activation signal output in the processor 22 configured to output an activation signal 38 to the windshield wiper module 36 when the electrode impedance value ZE is indicative of a moisture presence. With such an arrangement the windshield wipers 14 may only be activated if there is sufficient moisture on the windshield 12 to warrant wiping, and so avoid a situation where the vehicle operator is constantly adjusting the wiper control during variable weather conditions, or the vehicle operator has to quickly activate the wipers if an unexpected splash from another vehicle soaks the windshield 12.

The system 10 may include a window/sunroof control module 50 configured to receive an activation signal 52 from the controller 20 for activating powered windows and/or a powered sunroof to prevent moisture from entering the vehicle interior. Such a system may periodically check for moisture, and then automatically close the vehicle's windows or the vehicle's sunroof is rain is detected.

Fig. 3 illustrates an alternative non-limiting example of the system 10 where the isolated electrode 16 is formed of an electrically conductive material suitable for heating the windshield 12. In this example, the isolated electrode 16 is illustrated as a heater element that may be imbedded within, or attached to a surface of the windshield 12. The system 10 may also include a heater circuit 40 coupled to the isolated electrode 16. The heater circuit may include switches 42A, 42B coupled to a voltage supply such as vehicle battery voltage (B+), and vehicle ground (GND). The switches 42A, 42B are illustrated as being in an open state and receiving control signals 44A, 44B from the controller 20. If the controller 20 operates the switches 42A, 42B to a closed state, the isolated electrode 16 is coupled to the voltage supply such that current passes through the heater element in order for the isolated electrode 16 to generate heat, possibly for de-icing the windshield 12. However, when the controller 20 operates the switches to the open state, the heater circuit 40 isolates the isolated electrode from the voltage supplies (B+, GND) so that the controller 20 can determine the electrode impedance value ZE.

An alternative arrangement that avoids having to open the switches 42A, 42B in order to determine the electrode impedance value ZE is to include a common mode choke 46 in the heater circuit 40 as illustrated in Fig. 3. Then, if an isolated electrode signal VO is present on wire 18, the first winding of the common mode choke 46, the second winding generates a complementary voltage so none of the electrode signal VO leaks into the voltage supplies (B+, GND), and so the heater element is electrically isolated with regard to the electrode signal VO.

The system may include a second electrode (not shown) coupled to the windshield 12, for example a second sheet of copper foil similar to the isolated electrode shown in Fig. 1, but located at a distinct location on the windshield, for example in the lower left corner. Having a second electrode may provide an additional indication that a distinct portion of the windshield 12 has moisture present. It is understood that the second electrode is not providing a return path for the isolated electrode 16, but is providing for sensing moisture in another region of the windshield 12. The second electrode could be directly connected to the isolated electrode 16 and so would be readily understood to not provide a return path for the electric field emitted by the isolated electrode 16. Alternatively the second electrode may have an independent electrical connection to the controller 20 so that the controller can determine where on the windshield 12 that moisture is present. As such, the second electrode is coupled to the controller 20 and spaced apart from the isolated electrode 16 such that the second electrode does not influence the electrical impedance of the isolated electrode 16. With this arrangement, the second electrode exhibits a second impedance indicative of a second moisture presence in a second area proximate to the second electrode and distinct from a first area proximate to the isolated electrode 16.

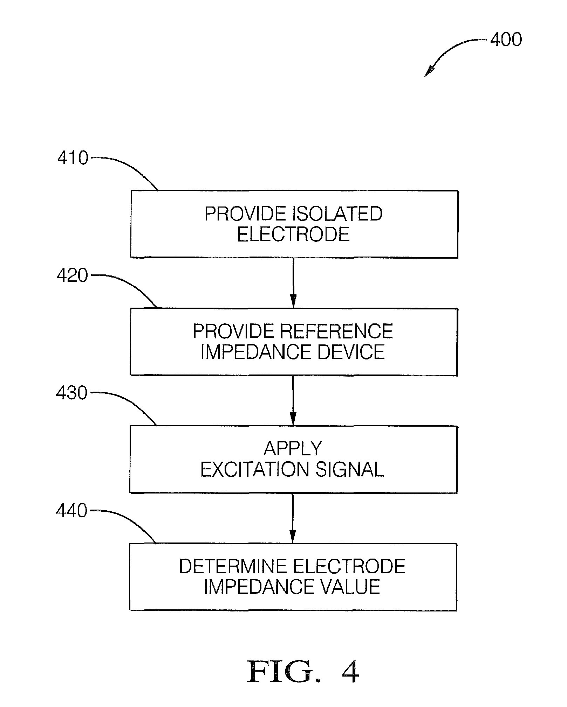

Fig. 4 illustrates a non-limiting example of a method 400 for detecting moisture on a windshield 12. Step 410, PROVIDE ISOLATED ELECTRODE, may include providing an isolated electrode 16 coupled to a windshield 12. The isolated electrode 16 is generally configured to exhibit an electrical impedance, such as the electrode impedance value ZE that may be indicative of moisture present on a surface of the windshield 12.

Step 420, PROVIDE REFERENCE IMPEDANCE DEVICE, may include providing a reference impedance device 24, and may include coupling a reference output 28 of the reference impedance device 24 to the isolated electrode 16 to form a network 26. The reference impedance device 24 may be characterized as having a reference impedance value ZR.

Step 430, APPLY EXCITATION SIGNAL, may include applying an excitation signal VI on a reference input 30 of the reference impedance device 24 in order to generate an electrode signal VO on the isolated electrode 16, wherein the electrode signal VO is indicative of the electrical impedance, in particular the electrode impedance value ZE.

Step 440, DETERMINE ELECTRODE IMPEDANCE VALUE, may include a controller 20 determining an electrode impedance value ZE corresponding to the electrical impedance exhibited by the isolated electrode 16 for detecting moisture on the windshield 12.

Accordingly, a system 10, a controller 20 and a method 400 for detecting moisture on a windshield is provided. A single, isolated electrode 16 is used to detect moisture, and so is simpler and less expensive than other systems that have at least one electrode providing a return path for another electrode. Also, a way to use the isolated electrode 16 for both detecting moisture on the windshield, and heating the windshield is described herein.

**Claims**

1.    A system (10) for detecting moisture on a windshield (12), said system (10) comprising:

  an isolated electrode (16) coupled to a windshield (12), said isolated electrode (16) configured to exhibit an electrical impedance indicative of moisture present on a surface the windshield (12); and
  a controller (20) in electrical communication with the isolated electrode (16), said controller (20) configured to determine an electrode impedance value corresponding to the electrical impedance exhibited by the isolated electrode (16) for detecting moisture on the windshield (12).

2.    The system (10) in accordance with claim 1, wherein said controller (20) is further configured to determine if the electrode impedance value is indicative of a moisture presence on a surface of the windshield (12).

3.    The system (10) in accordance with claim 1, wherein said controller (20) comprises a reference impedance device (24) having a reference impedance value, said reference impedance device (24) electrically coupled to the isolated electrode (16) to form a network (26), said reference impedance device (24) configured to define a reference output (28) in electrical contact with the isolated electrode (16) and define a reference input (30), wherein said controller (20) is further configured to apply an excitation signal on the reference input (30) in order to generate an isolated electrode (16) signal on the isolated electrode (16) for determining the electrical impedance exhibited by the isolated electrode (16).

4. The system (10) in accordance with claim 3, wherein said excitation signal has an excitation magnitude at an excitation frequency, said isolated electrode (16) signal has an isolated electrode (16) magnitude generated in response to the excitation signal, said controller (20) is further configured to determine the electrode impedance value based on the isolated electrode (16) signal; and said controller (20) is further configured to determine if the electrode impedance value is indicative of a moisture presence on a surface of the windshield (12).

5. The system (10) in accordance with claim 3, wherein said reference impedance device (24) cooperates with said network (26) to form a resonant circuit, and said controller (20) is further configured to vary the excitation frequency in order to determine a resonant frequency of the resonant circuit and thereby determine the electrode impedance value.

6. The system (10) in accordance with claim 3, wherein said reference impedance device (24) comprises a capacitor.

7. The system (10) in accordance with claim 6, wherein said electrode impedance value includes a capacitance value, and said controller (20) is further configured to determine if the capacitance value is indicative of a moisture presence on a surface of the windshield (12).

8. The system (10) in accordance with claim 7, wherein said capacitance value is indicative of a moisture presence on a surface of the windshield (12) when the capacitance value is greater than a threshold capacitance.

9. The system (10) in accordance with claim 1, wherein said windshield (12) is a vehicle forward windshield (12), said controller (20) is further configured to determine if the electrode impedance value is indicative of a moisture presence on a surface of the vehicle forward windshield (12) and output an activation signal (38) when a moisture presence is determined, and said system (10) further comprises a vehicle windshield wiper module (36) receiving the activation signal (38) from the controller (20) for activating vehicle windshield wipers (14) to wipe the vehicle forward windshield (12).

10. The system (10) in accordance with claim 1, wherein said controller (20) further configured to determine if the electrode impedance value is indicative of a moisture presence on a surface of the vehicle forward windshield (12) and output an activation signal (38) when a moisture presence is determined, and said system (10) further comprises a vehicle body module receiving the activation signal (38) from the controller (20) for closing a vehicle window to prevent moisture from entering the vehicle interior.

11. The system (10) in accordance with claim 1, wherein said isolated electrode (16) is formed of an electrically conductive material.

12. The system (10) in accordance with claim 11, wherein said isolated electrode (16) is formed of an electrically conductive material suitable for heating the windshield (12).

13. The system (10) in accordance with claim 12, wherein said system (10) further comprises a heater circuit (40) coupled to the isolated electrode (16), said heater circuit (40) configured to couple the isolated electrode (16) to a voltage supply in a manner effective for the isolated electrode (16) to generate heat.

14. The system (10) in accordance with claim 13, wherein said heater circuit (40) is further configured to isolate the isolated electrode (16) from the supply voltage when the controller (20) determines the electrode impedance value.

15. The system (10) in accordance with claim 14, wherein said heater circuit (40) includes a common mode choke (46) configured to isolate the isolated electrode (16) from the supply voltage when the controller (20) determines the electrode impedance value.

16. The system (10) in accordance with claim 1, wherein said system (10) further comprises a second electrode coupled to a windshield (12), said second electrode coupled to the controller (20) and spaced apart from the isolated electrode (16) such that the second electrode does not influence the electrical impedance of the isolated electrode (16),

**EP 2 522 554 A1**

wherein said second electrode exhibits a second impedance indicative of a second moisture presence in a second area proximate to the second electrode and distinct from a first area proximate to the isolated electrode (16).

**7**

FIG. 1

FIG. 2

FIG. 3

400

410

PROVIDE ISOLATED
ELECTRODE

420

PROVIDE REFERENCE
IMPEDANCE DEVICE

430

APPLY
EXCITATION SIGNAL

440

DETERMINE ELECTRODE
IMPEDANCE VALUE

FIG. 4

Europäisches
Patentamt
European
Patent Office
Office européen
des brevets

**EUROPEAN SEARCH REPORT**

**Application Number**

EP 12 16 5639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 672 976 A (EGGER ET AL) 30 September 1997 (1997-09-30) * the whole document * ----- | 1-15 | INV. B60S1/08 G01D5/24 G01N27/22 |
| X | US 2006/272397 A1 (HAWK ET AL) 7 December 2006 (2006-12-07) * abstract; figures 1-4,13,15a-15d * * paragraphs [0003], [0050] - [0052], [0090] - [0101], [0109] - [0110], [0114] * ----- | 1-4, 6-11,16 | |

TECHNICAL FIELDS
SEARCHED      (IPC)

B60S
G01D
G01N

The present search report has been drawn up for all claims

| Place of search | Date of completion of the search | Examiner |
|---|---|---|
| The Hague | 30 August 2012 | Barthélemy, Matthieu |

EPO FORM 1503 03.82 (P04C01)

## ANNEX TO THE EUROPEAN SEARCH REPORT
## ON EUROPEAN PATENT APPLICATION NO.

EP 12 16 5639

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2012

| Patent document cited in search report | | Publication date | Patent family member(s) | | Publication date |
|---|---|---|---|---|---|
| US 5672976 | A | 30-09-1997 | DE | 4426736 A1 | 01-02-1996 |
| | | | DE | 9421962 U1 | 28-05-1997 |
| | | | US | 5672976 A | 30-09-1997 |
| US 2006272397 | A1 | 07-12-2006 | US | 2006272397 A1 | 07-12-2006 |
| | | | WO | 2008021809 A2 | 21-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070162201 A, Veerasamy
- WO 2001891 A, Netzer